# NEUE EUROPÄISCHE PATENTSCHRIFT

(11) **EP 2 997 278 B2**
(45) Veröffentlichungstag und Bekanntmachung des Hinweises auf die Entscheidung über den Einspruch: **20.07.2022**
(45) Hinweis auf die Patenterteilung: 15.08.2018
(21) Anmeldenummer: 14721770.7
(22) Anmeldetag: 02.05.2014
(51) Int. Cl.: F16D 55/22, F16D 65/097

(54) **SATTELSCHEIBENBREMSE EINES FAHRZEUGS**
CALIPER DISC BRAKE OF A VEHICLE
FREIN À DISQUE À ÉTRIER D'UN VÉHICULE

(30) Priorität: 13.05.2013 DE 102013008155
(43) Veröffentlichungstag der Anmeldung: 23.03.2016
(73) Patentinhaber: ZF CV Systems Europe BV, 1170 Brussels (BE)
(72) Erfinder: FALTER, Wolfgang, 69118 Heidelberg (DE); FRIEBUS, Oliver, 69123 Heidelberg (DE); JÄGER, Hellmut, 67067 Ludwigshafen (DE); JUNGMANN, Hans-Christian, 69517 Gorxheimertal (DE)
(86) Internationale Anmeldenummer: PCT/EP2014/001174
(87) Internationale Veröffentlichungsnummer: WO 2014/183838

(56) Entgegenhaltungen:
- EP-A2- 0 694 707
- EP-A2- 1 767 805
- WO-A1-2014/060299
- WO-A1-2014/086474
- DE-A1-102007 046 945
- DE-A1-102007 049 979
- DE-A1-102008 027 052
- DE-B3-102007 036 353
- US-B2- 8 016 085

## Beschreibung

Die Erfindung betrifft eine Sattelscheibenbremse eines Fahrzeugs, insbesondere eines Nutzfahrzeugs, mit einer eine Drehachse aufweisenden Bremsscheibe, einem Bremssattel, einem Bremsenträger, einem Kraftübertragungselement, wie etwa einem Belagträger und/oder einer Druckplatte, das in einem Schacht des Bremssattels oder des Bremsenträgers geführt und abgestützt ist, einer Niederhaltefeder zum Niederhalten des Kraftübertragungselements und einer von einer Halteeinrichtung an dem Sattel gehaltenen und abgestützten Niederhalteeinrichtung, die die Niederhaltefeder radial gegen die Kraftübertragungseinrichtung vorspannt und die Niederhaltefeder tangential in Drehrichtung bei Vorwärtsfahrt gegen die Kraftübertragungseinrichtung vorspannt, wobei die Halteeinrichtung eine parallel zur Drehachse liegende Mittellinie aufweist.

Bremsen der eingangs genannten Art sind bekannt, beispielsweise aus der EP 694 707 B3. Charakteristisch für die Bremsen nach dem Stand der Technik ist der Achsversatz des Niederhaltebügels über eine außermittige formschlüssige Lagerung im Bremssattel, um über den formschlüssigen Eingriff in die dafür speziell ausgeformten Niederhaltefedern neben der radialen auch eine tangentiale Vorspannung auf die Bremsbeläge auszuüben.

Das Grundprinzip einer radialen und tangentialen Vorspannung hat sich bewährt und soll beibehalten werden. Jedoch werden erfindungsgemäß konstruktive und funktionelle Änderungen am Bremssattel sowie an den einschlägigen Teilen des Niederhaltesystems vorgenommen, um größere Wirtschaftlichkeit und größere Vielseitigkeit zu erreichen.

Die Figuren 1 und 2 zeigen die Bremse nach der EP 694 707 B3. Dabei zeigt Figur 1 einen in einer Schachtführung des Bremssattels oder Bremsenträgers radial einwärts und beidseitig in Umfangsrichtung geführten und abgestützten Bremsbelag 11, auf dessen radialer Außenkante eine gegenüber ihrer Mittenachse zu beiden Seiten hin symmetrisch ausgeformte Niederhaltefeder gelagert ist. Die Niederhaltefeder weist mittig einen radial tiefer liegenden Mittenbereich 3 auf, von dem sich die höher liegenden Federschenkel 6, 7 beidseitig entlang der Außenkante des Belags nach auswärts hin erstrecken, um dann endseitig federnd auf den Bremsbelag einzuwirken, wenn in den hier radial einwärts ausgeformten Mittenbereich unter Formschluß ein ebenfalls symmetrisch ausgeformter Niederhaltebügel 1 eingreift.

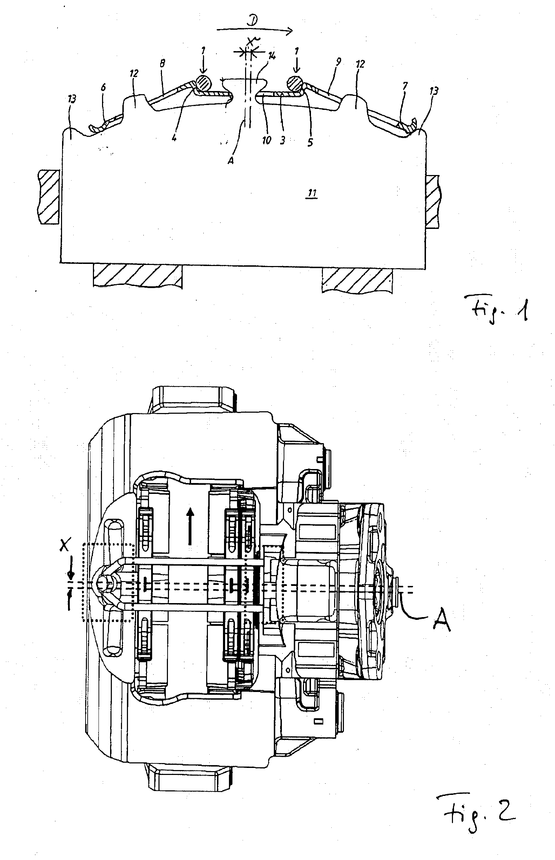

Der Niederhaltebügel 1 ist aus einem Rundmaterial ausgeformt. Die Federvorspannung tritt dann ein, wenn der Niederhaltebügel 1 wie nach Figur 2 auf der Zuspannseite in Formschlußöffnungen des Bremssattels verankert wird und dann andererseits fest, aber lösbar auf der Felgenseite auf einem Lagerblock des Bremssattels mittels Verschraubung befestigt wird. Der Niederhaltebügel erstreckt sich über eine dem Ein-/Ausbau der beidseitig der Bremsscheibe gelagerten Bremsbeläge dienenden Sattelöffnung und in einer Richtung zur Bremsen- bzw. Mittenachse A.

In Axialrichtung der Bremsbeläge sind die Niederhaltefedern mit dem Bremsbelag gekoppelt, weil radiale Ansätze 12, 14 von der Außenkante des Bremsbelages längliche Öffnungen 8, 9, 10 in der Feder durchdringen. Endseitig liegen die Federschenkel gegen weitere radiale Ansätze 13, 13 der Außenkante des Bremsbelages an. Die Niederhaltefedern sind als Blattfedern ausgebildet.

Die mittels der Niederhaltefeder auf den Bremsbelag einwirkende radiale und tangentiale Vorspannung wird nach dem Stand der Technik dadurch erzeugt, daß der Niederhaltebügel 1 in den radial ausgeformten Mittenbereich 3 der Niederhaltefeder formschlüssig eingreift und seinerseits unter Formschlüssigkeit in zuspann- und felgenseitigen Verankerungen des Bremssattels immer in Drehrichtung der Bremsscheibe bei Vorwärtsfahrt in Richtung Bremsscheibenauslaufseite um einen Achsversatz x gegenüber der Mitten- bzw. Bremsenachse A versetzt gelagert ist. Dadurch wird der entsprechende Federschenkel auch in Tangentialrichtung gedrängt. Für die außermittige formschlüssige Lagerung des Niederhaltebügels 1 müssen im Gußteil des Bremssattels die dafür erforderlichen gießtechnischen Ausformungen in entsprechender Positionierung vorhanden sein, die dann anschließend noch mechanischen Bearbeitungen zu unterziehen sind. Die Lagerstellen für den Niederhaltebügel 1 sind somit unsymmetrisch am/im Bremssattel ausgeformt.

Die einschlägigen Bremsen werden beidseitig der Achse verbaut, so daß sie auch spiegelbildlich ausgeführt sein müssen. Dies bedeutet, daß für Bremssättel nach dem Stand der Technik für eine linke und eine rechte Bremse unterschiedliche Gußmodellausführungen zur Herstellung der unsymmetrischen Lager- und Haltebereiche erforderlich sind. Demzufolge sind auch die Positionen der nachfolgenden mechanischen Bearbeitung für die Lager- und Haltebereiche bei einer linken Bremse anders als bei einer rechten Bremse.

Wegen der oben genannten Unsymmetrie steht dieses Prinzip mit unterschiedlichen Sattelausführungen einer wirtschaftlichen und kostenoptimierten Herstellung von den in Großserien gießtechnisch hergestellter und mechanisch bearbeiteter Bremssättel entgegen.

Der Erfindung liegt daher die Aufgabe zugrunde, die Bremse nach der EP 694 707 B3 derart weiterzubilden, daß die genannten Nachteile beseitigt sind. Insbesondere liegt der Erfindung die Aufgabe zugrunde, die Sattelscheibenbremse der eingangs genannten Art wirtschaftlicher und vielseitiger auszuführen.

Erfindungsgemäß wird die gestellte Aufgabe bei einer Sattelscheibenbremse der eingangs genannten Art dadurch gelöst, daß die tangentiale Vorspannung zumindest teilweise darauf zurückgeht, daß die Abmessungen der Niederhalteeinrichtung, gemessen in Tangentialrichtung von der Mittellinie auf der Scheibenauslaufseite zumindest abschnittweise größer sind als auf der Scheibeneinlaufseite.

Dabei liegt der Erfindung die Erkenntnis zugrunde, daß die Halteeinrichtung für die Niederhalteeinrichtung oder anders ausgedrückt die Lagerbereiche für einen Niederhaltebügel am Sattel dann symmetrisch ausgeführt werden können, wenn die tangentiale Vorspannung der Niederhaltefeder nicht auf eine Unsymmetrie des Sattels, sondern vielmehr auf eine Unsymmetrie der Niederhalteeinrichtung zurückgeht.

Die Vorteile liegen damit auf der Hand. Denn die in den Halte- und Lagerbereichen für die Niederhalteeinrichtung pro Achse spiegelsymmetrisch ausgeführten Bremssättel erfordern zur gießtechnischen Ausformung keine insofern unterschiedlichen Gießformen mehr. Darüber hinaus kann die anschließende mechanische Bearbeitung vereinheitlicht werden.

Erfindungsgemäß bevorzugt liegt die Niederhaltefeder auf der Zuspannseite. Es ist nämlich erfindungsgemäß bevorzugt, daß die den auf der Zuspannseite liegenden Bremsbelag und/oder die die ebenfalls auf der Zuspannseite liegende Druckplatte niederhaltende Niederhaltefeder in Tangentialrichtung vorgespannt wird, nicht aber die den Bremsbelag auf der Felgenseite niederhaltende Niederhaltefeder. Dadurch werden mechanisch ungünstige Momente vermieden.

Erfindungsgemäß ist vorgesehen, dass die Niederhalteeinrichtung zum Erzeugen der Radialvorspannung mit einem ersten Bereich und zum Erzeugen der Tangentialvorspannung mit einem zweiten Bereich an der Niederhaltefeder anliegt und der Abstand des Mittelpunkts des ersten Bereichs von dem Mittelpunkt des zweiten Bereichs in Radialrichtung kleiner ist als in Tangentialrichtung. Dadurch wird eine erhebliche mechanische Entlastung der Niederhaltefeder erreicht, weil dadurch Bereiche der Krafteinleitung in die Niederhaltefeder von den Bereichen maximaler Biegebelastung entfernt sind.

Der erste Bereich ist erfindungsgemäß weiter bevorzugt an einer sich nach radial innen erstreckenden Sicke ausgebildet. Dadurch werden unter anderem die oben bereits erwähnten Vorteile erzielt.

Der zweite Bereich ist erfindungsgemäß weiter bevorzugt bezüglich einer die Mittellinie enthaltenden Radialebene schräg angestellt. Dadurch sind geringfügige Relativbewegungen (Gleiten) bei Reversierbewegungen der Niederhaltefeder möglich. Dies entlastet die Niederhaltefeder in kritischen Zonen.

Die Niederhalteeinrichtung der erfindungsgemäßen Sattelscheibenbremse ist dazu geeignet, die oben im einzeln erläuterte Tangentialvorspannung auch dann zu erzeugen, wenn die an dem Bremssattel ausgebildete Halteeinrichtung zum Halten und Abstützen der Niederhalteeinrichtung bezüglich einer die Mittellinie enthaltenden Radialebene symmetrisch ist, so dass insofern keine unterschiedlichen Gießformen für eine rechte Bremse einerseits und eine linke Bremse andererseits erforderlich sind.

Erfindungsgemäß bevorzugt weist die Niederhalteeinrichtung einen sich in Tangentialrichtung erstreckenden Vorsprung auf, der auf der Scheibenauslaufseite und im zuspannseitigen Bereich liegt. Dadurch kann - entsprechend den obigen Darlegungen - die gewünschte Tangentialvorspannung auf der Zuspannseite erzeugt werden, wohingegen eine solche Tangentialvorspannung auf der Felgenseite vermieden ist.

Wie bereits oben erwähnt, weist die Niederhalteeinrichtung erfindungsgemäß bevorzugt eine sich nach radial innen erstreckende Sicke auf.

Nach einer weiter bevorzugten Ausführungsform der Erfindung ist eine Einbuchtung in Richtung der Drehachse vorgesehen, deren Seitenflanken im Zusammenwirken mit der Halteeinrichtung zum Übertragen von Tangentialkräften dienen. Dadurch ist eine mechanisch besonders einfache Lösung für das Erzeugen der Tangentialvorspannung realisiert.

Die Einbuchtung ist erfindungsgemäß weiter bevorzugt bezüglich einer die Mittellinie enthaltenden Radialebene symmetrisch. Dadurch kann auch die Halteeinrichtung an dem Bremssattel symmetrisch ausgeführt werden, was die bereits oben erwähnten Vorteile mit sich bringt.

Die Einbuchtung liegt erfindungsgemäß weiter bevorzugt auf der Zuspannseite.

Nach einer weiter bevorzugten Ausführungsform der Erfindung ist eine Kodiereinrichtung vorgesehen. Die Kodiereinrichtung weist weiter bevorzugt eine Einbuchtung auf.

Nach einer besonders bevorzugten Ausführungsform der Erfindung liegt die Kodiereinrichtung auf der Felgenseite.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 1 und 2: Sattelscheibenbremsen nach dem Stand der Technik,

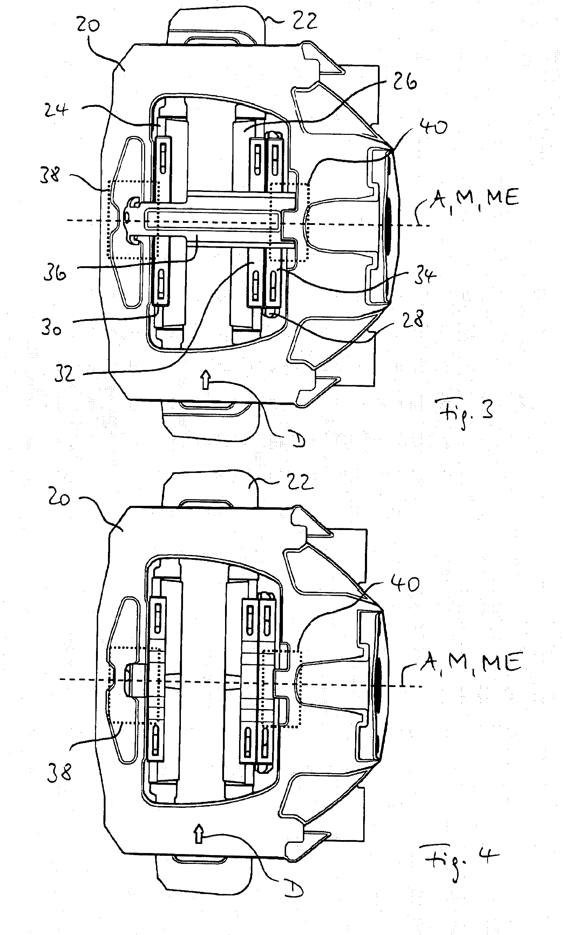

- die Figuren 3 und 4: schematische Draufsichten auf eine Sattelscheibenbremse nach einem Ausführungsbeispiel der Erfindung,

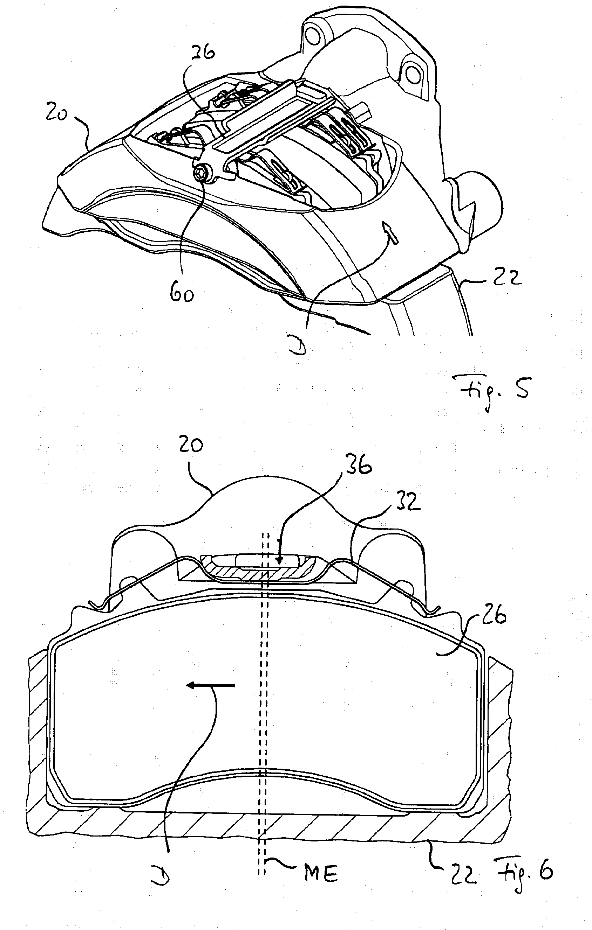

- Figur 5: eine schematische perspektivische Ansicht der Bremse nach den Figuren 3 und 4,
- Figur 6: eine schematische Schnittansicht der Bremse nach den Figuren 3 und 4,
- Figur 7: schematisch einen Niederhaltebügel der Bremse nach den Figuren 3 und 4,
- die Figuren 8 und 9: das Zusammenspiel des Niederhaltebügels mit dem Bremssattel,
- Figur 10: eine perspektivische Teilansicht auf einen Haltebereich des Bremssattels für den Niederhaltebügel,
- Figur 11: eine schematische Teilansicht eines anderen Haltebereichs des Sattels für den Niederhaltebügel,
- die Figuren 12 und 13: zwei verschiedene Ausführungsformen der Befestigung des Niederhaltebügel auf der Felgenseite des Sattels,
- die Figuren 14 bis 18: verschiedene Ansichten von Niederhaltefedern für die Bremse nach den Figuren 3 und 4 und
- die Figuren 19 und 20: Schnittansichten des Zusammenspiels des Niederhaltebügels mit der Niederhaltefeder nach einem Ausführungsbeispiel der Erfindung bzw. nach dem Stand der Technik.

Das in der Zeichnung dargestellte Ausführungsbeispiel einer Sattelscheibenbremse nach der Erfindung weist eine (nicht gezeigte) Bremsscheibe auf, deren Drehachse mit A bezeichnet ist. Die Drehrichtung bei Vorwärtsfahrt ist mit einem Pfeil D bezeichnet. Die Bremse weist einen Bremssattel 20 und einen Bremsenträger 22 auf, wobei der Bremssattel die (nicht gezeigte) Bremsscheibe rahmenartig umgreift. Ein felgenseitiger Bremsbelag, bestehend aus einer metallischen Rückenplatte mit Reibbelag, ist mit der Bezugszahl 24 bezeichnet, ein zuspannseitiger Bremsbelag, bestehend aus einer metallischen Rückenplatte mit Reibbelag, mit der Bezugszahl 26 und eine Druckplatte mit der Bezugszahl 28. Bei den genannten Elementen handelt es sich um Kraftübertragungselemente. Sie werden mit Niederhaltefedern 30, 32 bzw. 34 niedergehalten, d.h. in Radialrichtung vorgespannt. Wie später noch erläutert wird, werden der Bremsbelag 26 und die Druckplatte 28 auch in Tangentialrichtung vorgespannt.

Zum Niederhalten der genannten Niederhaltefedern 30, 32 und 34 dient eine in Form eines Niederhaltebügels 36 ausgeführte Niederhalteeinrichtung, die sich über eine dem Ein-/Ausbau der beidseitig der Bremsscheibe gelagerten Bremsbeläge dienenden Sattelöffnung erstreckt. Der Niederhaltebügel 36 ist dabei nicht nur für die radiale Vorspannung der Niederhaltefedern 30, 32 und 34 verantwortlich, sondern auch für die tangentiale Vorspannung der Niederhaltefedern 32 und 34. Auf die Niederhaltefeder 30 und den Bremsbelag 24 wirkt demgegenüber nur eine radiale Vorspannung, jedoch keine tangentiale. Dadurch werden für den Betrieb der Bremse ungünstige und sich auf die leichte Verschiebbarkeit des Gleitsattels auswirkende Momente vermieden, die auf eine Tangentialvorspannung der Niederhaltefeder 30 und des Bremsbelags 24 zurückgingen.

Der Bremssattel 20, bei dem es sich in dem in der Zeichnung dargestellten Ausführungsbeispiel um einen Gleitsattel handelt, weist eine Halteeinrichtung zum Halten und Abstützen des Niederhaltebügels 36 auf. Zu dieser Halteeinrichtung gehören zwei Bereiche, nämlich ein felgenseitiger Bereich 38 und ein zuspannseitiger Bereich 40. Beide Bereiche sind (in der Draufsicht) symmetrisch zu einer Mittellinie M ausgebildet, die parallel zur Drehachse A liegt. Sie sind auch symmetrisch zu einer radialen Mittelebene ME, die von der Drehachse A und der Mittellinie M aufgespannt wird. Durch diese Symmetrie ist die Kontur der Halteeinrichtung derart, daß ein und dieselbe Form beim Gießen des Sattels verwendet werden kann, gleichgültig ob der Sattel für eine rechte oder eine linke Bremse ausgelegt ist.

Zu dem zuspannseitigen Bereich 40 der Halteeinrichtung gehört ein dachkantenartig ausgebildeter Vorsprung 42. Seine Seitenflanken 44, 46 dienen zum Aufnehmen von Tangentialkräften. Seine radial innen liegende Flanke 48 dient zum Aufnehmen von Radialkräften.

Der Niederhaltebügel 36 ist auf der Zuspannseite zu dem Vorsprung 42 passend ausgeführt. So weist er eine Einbuchtung 50 auf, die in montiertem Zustand den Vorsprung 42 aufnimmt. Seitenflanken 52 und 54 der Einbuchtung 50 dienen dabei zum Übertragen von Tangentialkräften. Eine radial außen liegende Fläche 56 dient zum Übertragen von Radialkräften. Sie liegt in eingebautem Zustand an der Flanke 48 des zur Bremsscheibe weisenden Vorsprungs 42 an.

In dem felgenseitigen Bereich 38 weist der Sattel 20 eine Gewindebohrung 58 auf, in die zum Befestigen des Niederhaltebügels 36 eine Schraube 60 eingeschraubt wird. Der felgenseitige Bereich 38 der Halteeinrichtung ist wie der zuspannseitige Bereich 40 symmetrisch bezüglich der Mittellinie M und der Mittelebene ME ausgeführt. Lediglich die Gewindebohrung 58 liegt nicht symmetrisch, um zu verhindern, daß ein Niederhaltebügel für eine rechte (linke) Bremse an einer linken (rechten) Bremse montiert wird. Sie ist nicht gießtechnisch ausgebildet, sondern wird nach dem eigentlichen Gießen des Sattels mittels eines Bohrers und/oder eines Gewindeschneiders eingebracht.

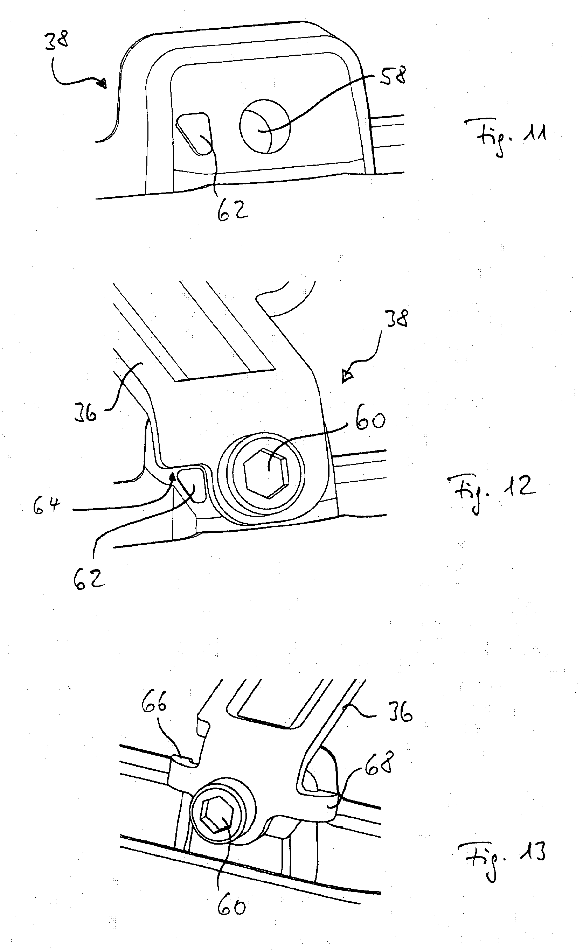

in dem Bereich 38 der Halteeinrichtung ist eine Kodiereinrichtung vorgesehen. Dazu kann gemäß den Figuren 11 und 12 bei der mechanischen Bearbeitung ein Überstand 62 ausgelassen werden, so daß gemäß Figur 12 nur ein solcher Niederhaltebügel 36 montiert werden kann, der eine zu dem Überstand 62 passende Ausnehmung 64 aufweist. Wie die Gewindebohrung 58 ist der Überstand 62 nicht durch Gießtechnik ausgebildet und kann daher unsymmetrisch angeordnet sein.

Zusätzlich oder alternativ kann auch vorgesehen sein, daß der Niederhaltebügel 36 gemäß Figur 13 Zapfenansätze aufweist, die korrespondierende Strukturen an dem Sattel 20 umgreifen. Dies stellt wiederum sicher, daß nur ein passender Niederhaltebügel 36 montiert werden kann.

Bei dem Überstand 62, der Ausnehmung 64 und den Zapfenansätzen 66 und 68 handelt es sich mithin um Kodiereinrichtungen, die sicherstellen, daß immer nur ein passender Niederhaltebügel an dem Sattel angebracht wird.

Der Niederhaltebügel ist in zweierlei Hinsicht unsymmetrisch. Zum einen weist er Tangentialansätze 70 und 72 nur auf der Zuspannseite auf, nicht aber auf der Felgenseite. Zum anderen sind seine Abmessungen V1, V2 gemessen in Tangentialrichtung von der Mittellinie M im Bereich des ersten Ansatzes 70, d.h. auf der Scheibenauslaufseite größer als im Bereich des Ansatzes 72, also auf der Scheibeneinlaufseite.

Durch diese Ausgestaltung ist es möglich, dem zuspannseitigen Bremsbelag 26 und der auf der Zuspannseite liegenden Druckplatte 28 eine tangentiale Vorspannung einzuprägen, ohne daß der Bremssattel 20 in den Bereichen 38 und 40 seiner Halteeinrichtung für den Niederhaltebügel 36 entsprechend unsymmetrisch ausgestaltet werden müßte und ohne daß eine nachteilige Tangentialvorspannung auf den felgenseitigen Bremsbelag 24 wirkt.

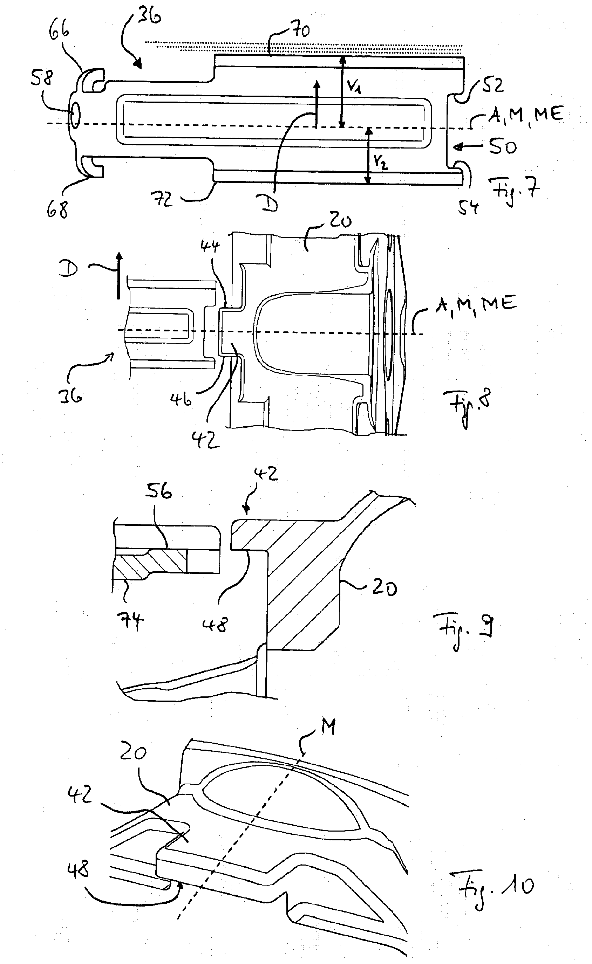

Auch die Vielfältigkeit, mit Aufbringung unterschiedlicher Federvorspannungen, kann im Zusammenspiel mit den Niederhaltefedern in einfacher Weise gezielt gesteuert werden. Dies kann dadurch erfolgen, daß nach Fig. 7 in Richtung der gestrichelten Linien zum Scheibenauslauf nur die Breite V1 des Niederhaltebügels verändert werden muß. Dafür ist lediglich das umzuformende Blechstanzteil entsprechend auszubilden. Im Zusammenspiel mit den o. g. Kodierungen kann dann eine genaue Zuordnung zur entsprechenden Bremse und deren Einsatzbedingungen erfolgen, ohne daß dafür Anpassungen an den Gußbereichen des Bremssattels vorzunehmen sind.

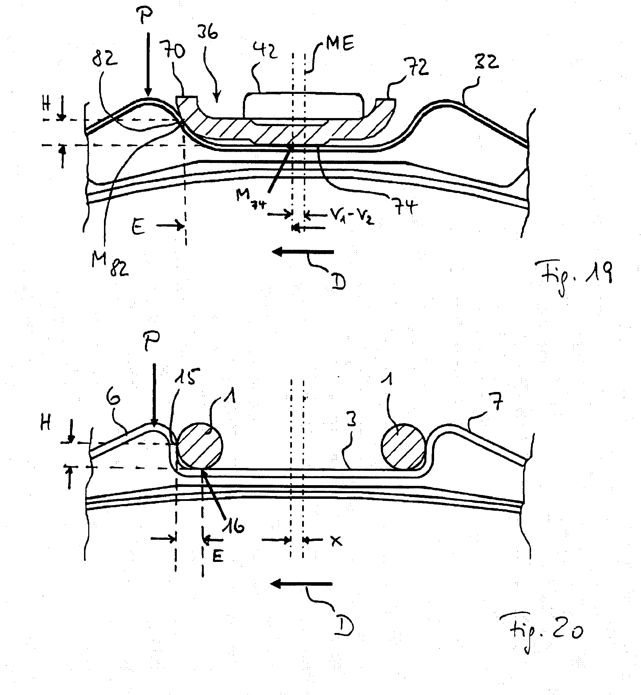

Der Niederhaltebügel 36 ist vorzugsweise als umgeformtes Blechstanzteil hergestellt und weist eine Sicke auf, die entsprechend der Differenz zwischen den Abmessungen V1 und V2 bezüglich der Mittellinie M bzw. der Radialebene R versetzt ist. Die Sicke ist mit der Bezugszahl 74 bezeichnet. Sie liegt in montiertem Zustand flächig an der jeweiligen Niederhaltefeder 30, 32 bzw. 34 an und dient zum Einprägen der radialen Vorspannung, vgl. Figur 19. Demgegenüber liegt bei der Ausgestaltung nach Figur 20, die dem Stand der Technik entspricht, nur eine Linienanlage vor. Eine solche Linienanlage belastet selbstverständlich die Niederhaltefeder erheblich stärker als die Flächenanlage nach Figur 19.

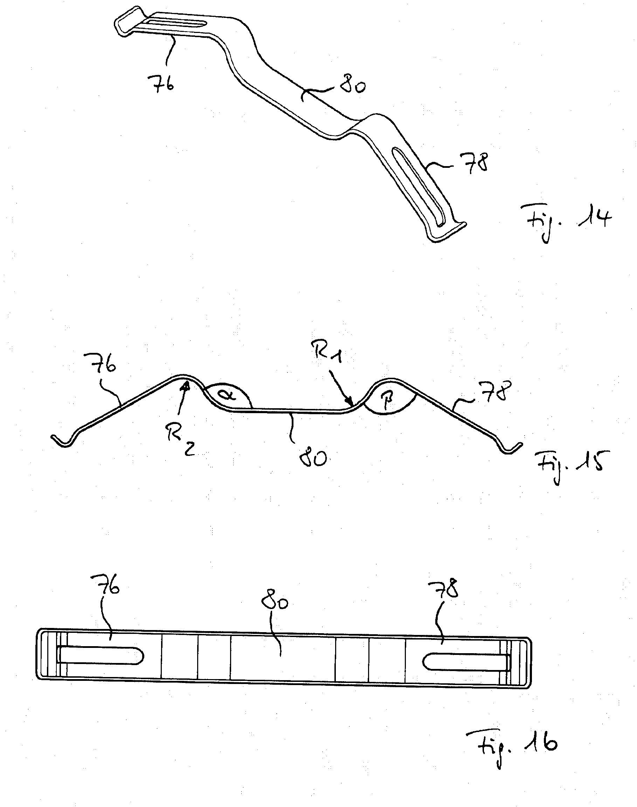

Ausgestaltungen der Niederhaltefeder in Form einer Blattfeder sind insbesondere den Figuren 14 bis 18 zu entnehmen. Sie weist zwei gleiche Federschenkel 76, 78 und einen dazwischen liegenden trapezförmigen Mittelbereich 80 auf, der nach radial innen vorspringt. Die beiden Schenkel des trapezförmigen Bereichs 80 schließen mit dessen Boden in entspanntem Zustand jeweils einen Winkel α von mehr als 95° ein. Bei dem in der Zeichnung dargestellten Ausführungsbeispiel sind es 117°. Mit den beiden benachbarten Federschenkeln 76, 78 schließen sie jeweils einen Winkel β von weniger als 85° ein. In dem dargestellten Ausführungsbeispiel beträgt der Winkel β 74°.

Die Federn sind in der Seitenansicht nicht eckig. Vielmehr sind sie in entspanntem Zustand im Übergangsbereich zwischen den beiden Schenkeln des trapezförmigen Bereichs 80 und dessen Boden jeweils bogenförmig mit einem Radius von jeweils 10 mm bis 16 mm, in dem dargestellten Ausführungsbeispiel 13 mm, und im Übergangsbereich zwischen dem trapezförmigen Bereich 80 und den Federschenkeln 76, 78 bogenförmig mit einem Radius von 4 mm bis 9,5 mm, in dem dargestellten Ausführungsbeispiel 7 mm.

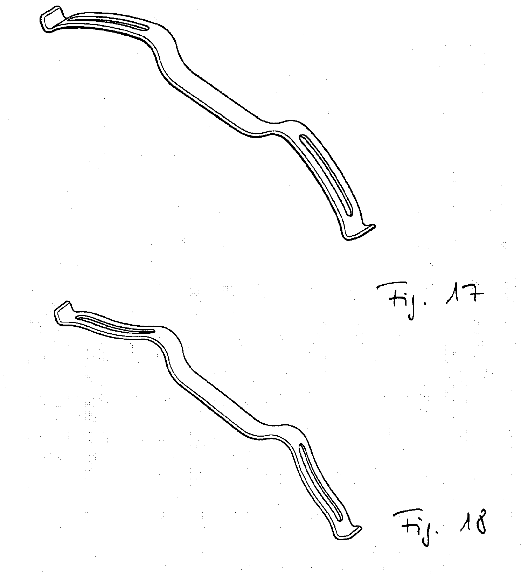

Die Federschenkel 76, 78 können entsprechend den Figuren 14 bis 16 gerade ausgeführt sein. Sie können aber auch konvex oder konkav gestaltet sein, wie dies den Figuren 17 und 18 zu entnehmen ist.

Derjenige Bereich des Vorsprungs 70, der an der Niederhaltefeder 32 anliegt, ist in Figur 19 mit der Bezugszahl 82 bezeichnet. Sein Mittelpunkt M₈₂ hat von dem Mittelpunkt M₇₄ in Radialrichtung den Abstand H und in Tangentialrichtung den Abstand E, wobei gilt H < E. Im Gegensatz dazu liegen die entsprechenden Anlagelinien 15 und 16 bei dem Stand der Technik derart, daß gilt: H = E, vgl. Fig. 20.

Bei dem in der Zeichnung dargestellten Ausführungsbeispiel liegt der Ort P der höchsten (Druck-)Spannung in der Niederhaltefeder 32, der sich im Übergangsbereich zwischen dem Mittenbereich 74 und dem Federschenkel 76 befindet, weit entfernt von dem (flächigen) Bereich des höchsten Verschleißes durch Reibung bzw. durch Radialanschlag des Bremsbelages bzw. der Druckplatte in den Kontaktbereichen.

Bei gleichen Einsatzbedingungen, wie vorab genannt, liegt demgegenüber nach dem Stand der Technik aus Figur 20 im radialen Kontaktbereich nur eine Linienanlage vor, so dass hier der Ort des höchsten Verschleißes im radialen Bereich mit der Linienanlage (siehe Pfeil) dann unmittelbar und nahe dem Bereich P der höchsten (Druck-)Spannung in der Niederhaltefeder angrenzt, wobei hier gilt H = E.

Wie insbesondere Figur 19 zu entnehmen ist, hat der Niederhaltebügel 36 im Querschnitt eine trogartige Ausgestaltung, wobei er außen, d.h. am Ende der Vorsprünge 70, 72 schräg angestellt ist. Dadurch sind geringfügige Relativbewegungen (Gleiten) bei Reversierbewegungen der Niederhaltefeder möglich. Beim Stand der Technik nach Figur 20 mit dem Rundmaterial, das an senkrechten Federabschnitten anliegt, ist dies nicht so. Die erfindungsgemäße Ausgestaltung senkt die Belastungen in den kritischen Zonen.

Wie im Stand der Technik nach Figur 1 sind auch hier in Axialrichtung der Bremsbeläge die Niederhaltefedern mit dem Bremsbelag gekoppelt, weil radiale Ansätze (12) von der Außenkante des Bremsbelages längliche Öffnungen (8, 9) in den beiden seitlichen Federschenkeln der Feder durchdringen. Endseitig liegen die Federschenkel gegen weitere radiale Ansätze (13, 13) der Außenkante des Bremsbelages an. Die Niederhaltefedern sind als Blattfedern ausgebildet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Sattelscheibenbremse eines Fahrzeugs, insbesondere eines Nutzfahrzeugs, mit
einer eine Drehachse (A) aufweisenden Bremsscheibe,
einem Bremssattel (20),
einem Bremsenträger (22),
einem Kraftübertragungselement, wie etwa einem Belagträger (24, 26) und/oder einer Druckplatte (28), das in einem Schacht des Bremssattels oder des Bremsenträgers geführt und abgestützt ist,
einer Niederhaltefeder (30, 32, 34) zum Niederhalten des Kraftübertragungselements und
einer von einer Halteeinrichtung (38, 40) an dem Sattel gehaltenen und abgestützten Niederhalteeinrichtung (36), die
die Niederhaltefeder radial gegen die Kraftübertragungseinrichtung vorspannt und die Niederhaltefeder tangential in Drehrichtung (D) bei Vorwärtsfahrt gegen die Kraftübertragungseinrichtung vorspannt, wobei
die Halteeinrichtung (38, 40) eine parallel zur Drehachse liegende Mittellinie (M) aufweist,
**dadurch gekennzeichnet, daß**
die tangentiale Vorspannung zumindest teilweise darauf zurückgeht, daß die Abmessungen (V_{1,} V₂) der Niederhalteeinrichtung (36), gemessen in Tangentialrichtung von der Mittellinie (M) auf der Scheibenauslaufseite zumindest abschnittweise größer sind als auf der Scheibeneinlaufseite, die Niederhalteeinrichtung (36) zum Erzeugen der Radialvorspannung mit einem ersten Bereich (74) und zum Erzeugen der Tangentialvorspannung mit einem zweiten Bereich (82) an der Niederhaltefeder (30, 32, 34) anliegt und
der Abstand des Mittelpunkts (M₇₄) des ersten Bereichs von dem Mittelpunkt (M₈₂) des zweiten Bereichs in Radialrichtung kleiner ist als in Tangentialrichtung (H < E).

2. Sattelscheibenbremse nach Anspruch 1, **dadurch gekennzeichnet, daß** die Niederhaltefeder (32, 34) auf der Zuspannseite liegt.

3. Sattelscheibenbremse nach Anspruch 1 oder 2, **dadurch gekennzeichnet, daß** der erste Bereich an einer sich nach radial innen erstreckenden Sicke (74) ausgebildet ist.

4. Sattelscheibenbremse nach einem der vorangehenden Ansprüche, **dadurch gekennzeichnet, daß** der zweite Bereich bezüglich einer die Mittellinie (M) enthaltenden Radialebene (ME) schräg angestellt ist.

5. Scheibenbremse nach einem der vorangehenden Ansprüche, **gekennzeichnet durch** einen sich in Tangentialrichtung erstreckenden Vorsprung (70) an der Niederhalteeinrichtung (36), der auf der Scheibenauslaufseite und im zuspannseitigen Bereich liegt.

6. Scheibenbremse nach Anspruch 5, **gekennzeichnet durch** eine sich nach radial innen erstreckende Sicke (74) an der Niederhalteeinrichtung (36).

7. Sattelscheibenbremse nach einem der Ansprüche 5 bis 7, **dadurch gekennzeichnet, dass** die Niederhalteeinrichtung (36) eine Einbuchtung (50) in Richtung der Drehachse (A) aufweist, deren Seitenflanken (52, 54) im Zusammenwirken mit der Halteeinrichtung (38, 40) zum Übertragen von Tangentialkräften dienen.

8. Sattelscheibenbremse nach Anspruch 7, **dadurch gekennzeichnet, daß** die Einbuchtung (50) bezüglich einer die Mittellinie (M) enthaltenden Radialebene (ME) symmetrisch ist.

9. Sattelscheibenbremse nach Anspruch 7 oder 8, **dadurch gekennzeichnet, daß** die Einbuchtung (50) auf der Zuspannseite liegt.

10. Sattelscheibenbremse nach einem der vorangehenden Ansprüche, **dadurch gekennzeichnet, daß** die Niederhalteeinrichtung (36) eine Kodiereinrichtung (62, 64; 66, 68) aufweist.

11. Scheibenbremse nach Anspruch 10, **dadurch gekennzeichnet, daß** die Kodiereinrichtung (62, 64; 66, 68) eine Einbuchtung (64) aufweist.

12. Sattelscheibenbremse nach Anspruch 10 oder 11, **dadurch gekennzeichnet, daß** die Kodiereinrichtung (62, 64; 66, 68) auf der Felgenseite liegt.

## Claims

1. Caliper disk brake of a vehicle, in particular a commercial vehicle, with
a brake disk having an axis of rotation (A),
a brake caliper (20),
a brake carrier (22),
a force transmission element, such as a brake-pad plate (24, 26) and/or a pressure plate (28), which is guided and supported in a channel of the brake caliper or the brake carrier,
a hold-down spring (30, 32, 34) for holding down the force transmission element, and
a hold-down device (36) held and supported on the caliper by a holding device (38, 40), which hold-down device
pre-stresses the hold-down spring radially against the force transmission device and
pre-stresses the hold-down spring against the force transmission device tangentially in the direction of rotation (D) in forwards travel, wherein
the holding device (38, 40) has a centerline (M) lying parallel to the axis of rotation,
**characterized in that**
the tangential pre-stressing is at least partially attributable to the fact that the dimensions (V_{1,} V₂) of the hold-down device (36), measured in a tangential direction from the centerline (M), are at least in parts greater on the disk run-out side than on the disk run-in side, the hold-down device (36) bears, to generate the radial pre-stress, by way of a first region (74) and, to generate the tangential pre-stress, by way of a second region (82), against the hold-down spring (30, 32, 34), and the spacing of the central point (M₇₄) of the first region from the central point (M₈₂) of the second region is smaller in the radial direction than in the tangential direction (H < E) .

2. Caliper disk brake according to Claim 1, **characterized in that** the hold-down spring (32, 34) lies on the actuation side.

3. Caliper disk brake according to Claim 1 or 2, **characterized in that** the first region is formed on a radially inwardly extending bead (74).

4. Caliper disk brake according to one of the preceding claims, **characterized in that** the second region is oriented obliquely with respect to a radial plane (ME) containing the centerline (M).

5. Disk brake according to one of the preceding claims, **characterized by** a projection (70) on the hold-down device (36), which projection (70) extends in a tangential direction and which lies on the disk run-out side and in the actuation-side region.

6. Disk brake according to Claim 5, **characterized by** a radially inwardly extending bead (74) on the hold-down device (36).

7. Caliper disk brake according to one of Claims 5 to 7, **characterized in that** the hold-down device (36) has a recess (50) in the direction of the axis of rotation (A), the side flanks (52, 54) of which recess, in interaction with the holding device (38, 40), serve for the transmission of tangential forces.

8. Caliper disk brake according to Claim 7, **characterized in that** the recess (50) is symmetrical in relation to a radial plane (ME) containing the centerline (M).

9. Hold-down device according to Claim 7 or 8, **characterized in that** the recess (50) lies on the actuation side.

10. Holding device according to one of the preceding claims, **characterized in that** the hold-down device (36) comprises a coding device (62, 64; 66, 68).

11. Disk brake according to Claim 10, **characterized in that** the coding device (62, 64; 66, 68) comprises a recess (64) .

12. Caliper disk brake according to Claim 10 or 11, **characterized in that** the coding device (62, 64; 66, 68) lies on the wheel rim-side.

## Revendications

1. Frein à disque à étrier d'un véhicule, en particulier d'un véhicule utilitaire, ledit frein à disque à étrier comprenant
un disque de frein comportant un axe de rotation (A),
un étrier de frein (20),
un support de frein (22),
un élément de transmission de force, comme par exemple un support de garniture (24, 26) et/ou une plaque de pression (28), qui est guidé et supporté dans une gaine de l'étrier de frein ou du support de frein,
un ressort de maintien (30, 32, 34) destiné à maintenir l'élément de transmission de force et
un dispositif de maintien (36) qui est retenu et supporté au niveau de l'étrier par un dispositif de retenue (38, 40) et qui précontraint
le ressort de maintien radialement contre le dispositif de transmission de force et
le ressort de maintien contre le dispositif de transmission de force tangentiellement dans la direction de rotation (D) lors de la conduite vers l'avant,
le dispositif de retenue (38, 40) comportant un axe médian (M) parallèle à l'axe de rotation,
**caractérisé en ce que**
la précontrainte tangentielle est au moins en partie attribuée au fait que les dimensions (V_{1,} V₂) du dispositif de maintien (36), mesurées dans la direction tangentielle depuis l'axe médian (M) sont au moins en partie plus grandes du côté sortie de disque que du côté entrée de disque, le dispositif de maintien (36) vient en appui avec une première région (74), afin de générer la précontrainte radiale, et avec une deuxième région (82), afin de générer la précontrainte tangentielle, sur le ressort de maintien (30, 32, 34),
et la distance du centre (M₇₄) de la première région au centre (M₈₂) de la deuxième région est plus petite dans la direction radiale que dans la direction tangentielle (H < E).

2. Frein à disque à étrier selon la revendication 1, **caractérisé en ce que** le ressort de maintien (32, 34) est situé du côté serrage.

3. Frein à disque à étrier selon la revendication 1 ou 2, **caractérisé en ce que** la première région est réalisée au niveau d'une moulure (74) s'étendant radialement vers l'intérieur.

4. Frein à disque à étrier selon l'une des revendications précédentes, **caractérisé en ce que** la deuxième région est inclinée obliquement par rapport à un plan radial (ME) contenant l'axe médian (M).

5. Frein à disque à étrier selon l'une des revendications précédentes, caractérisé, au niveau du dispositif de maintien (36), par une saillie (70) qui s'étend dans la direction tangentielle et qui est située du côté sortie de disque et dans la région côté serrage.

6. Frein à disque à étrier selon la revendication 5, caractérisé, au niveau du dispositif de maintien (36), par une moulure (74) s'étendant radialement vers l'intérieur.

7. Frein à disque à étrier selon l'une des revendications 5 à 7, **caractérisé en ce que** le dispositif de maintien (36) comporte un renfoncement (50) dans la direction de l'axe de rotation (A), dont les flancs latéraux (52, 54) servent à transmettre des forces tangentielles par coopération avec le dispositif de retenue (38, 40).

8. Frein à disque à étrier selon la revendication 7, **caractérisé en ce que** le renfoncement (50) est symétrique par rapport à un plan radial (ME) contenant l'axe médian (M).

9. Frein à disque à étrier selon la revendication 7 ou 8, **caractérisé en ce que** le renfoncement (50) est situé du côté serrage.

10. Frein à disque à étrier selon l'une des revendications précédentes, **caractérisé en ce que** le dispositif de maintien (36) comporte un dispositif de codage (62, 64 ; 66, 68).

11. Frein à disque à étrier selon la revendication 10, **caractérisé en ce que** le dispositif de codage (62, 64 ; 66, 68) comporte un renfoncement (64).

12. Frein à disque à étrier selon la revendication 10 ou 11, **caractérisé en ce que** le dispositif de codage (62, 64 ; 66, 68) est situé du côté jante.
